# EUROPEAN PATENT SPECIFICATION

(11) **EP 2 781 436 B1**
(45) Date of publication and mention of the grant of the patent: **03.02.2016**
(21) Application number: 14159926.6
(22) Date of filing: 14.03.2014
(51) Int. Cl.: B62D 5/04, B60W 10/20, B60W 30/18, F02N 11/08

(54) **Power steering device of vehicle**
Servolenkvorrichtung eines Fahrzeugs
Dispositif de direction assistée de véhicule

(30) Priority: 19.03.2013 JP 2013056529
(43) Date of publication of application: 24.09.2014
(73) Proprietor: Mitsubishi Jidosha Kogyo Kabushiki Kaisha, Tokyo 108-8410 (JP)
(72) Inventor: Yamanaka, Hiroki, Tokyo, 108-8410 (JP); Kodama, Tetsuya, Tokyo, 108-8410 (JP); Chuda, Seiji, Tokyo, 108-8410 (JP)
(74) Representative: Vossius & Partner Patentanwälte Rechtsanwälte mbB

(56) References cited:
- EP-A2- 2 127 997
- JP-A- 2010 173 417

## Description

### BACKGROUND OF THE INVENTION

### Field of the Invention

The present invention relates to a control technique for an electric power steering device in a vehicle including an idle stop device.

### Description of the Related Art

As means for improving gas mileage of an automobile, there has been known an idle stop device that automatically stops the operation of an engine when traveling stops at an intersection or the like.

The idle stop device is a device that automatically stops, when a driving state of a vehicle satisfies a predetermined stop condition, idling of an engine and thereafter restarts the engine and starts the vehicle when a predetermined start condition holds.

In recent years, there are an increasing number of vehicles including an electric power steering device that performs assist of steering torque of a steering device with an electric motor. In general, such an electric power steering device performs control to suppress power consumption without performing the assist during a stop of an engine.

Furthermore, in a vehicle including the idle stop device and the electric power steering device, there has been developed a technique for enabling assist after suppressing an assist amount for steering torque during a vehicle stop and enabling securing of the steering torque immediately when an engine is restarted (see Japanese Patent No. 4301050 publication). Furthermore examples of electric power steering systems for vehicles provided with an idle-stop device according to the preamble of claim 1 are disclosed in patent applications JP2010173417A and EP2127997A2.

Incidentally, in a vehicle in recent years, as the idle stop device, there is an idle stop device that, in order to further suppress fuel consumption, performs control to permit an automatic stop of an engine when not only a condition that a vehicle stops traveling but also a condition that the vehicle is traveling at low speed is satisfied as the predetermined stop condition.

In the vehicle that can automatically stop the engine during the low-speed traveling, if the assist of the steering torque is only enabled during the vehicle stop as described in the patent publication, it is likely that power consumption is not sufficiently suppressed. Further suppression of the power consumption is requested.

If the control is performed not to perform the assist of the steering torque when the engine is automatically stopped during the low-speed traveling, it is likely that, although the vehicle is traveling, the steering torque is not assisted and steering performance is deteriorated.

### SUMMARY OF THE INVENTION

The present invention has been devised in order to solve the problems and it is an object of the present invention to provide an electric power steering device of a vehicle capable of suppressing power consumption while securing an assist amount for steering torque during an automatic stop of an engine in a vehicle capable of performing the automatic stop of the engine during traveling of the vehicle.

In order to attain the object, the present invention provides an electric power steering control device of a vehicle including: an idle stop device configured to execute idle-stop-during-stoppage control such that an engine of the vehicle is automatically stopped when predetermined stop conditions during stoppage including a condition that the vehicle is stopped hold, and execute idle-stop-during-traveling control such that the engine is automatically stopped when predetermined stop conditions during traveling including a condition that the vehicle is traveling at traveling speed equal to or lower than predetermined speed hold; and an electric power steering section configured to assist steering torque of the vehicle with an electric motor. The electric power steering control device includes an upper limit value setting section configured to set an upper limit value of an assist amount for the steering torque in the electric power steering section. The upper limit value setting section sets the upper limit value to a first upper limit value when the traveling speed of the vehicle is higher than the predetermined speed, sets the upper limit value to a second upper limit value smaller than the first upper limit value when the idle-stop-during-stoppage control is being executed by the idle stop device, and sets the upper limit value to a third upper limit value smaller than the first upper limit value and larger than the second upper limit value when the idle-stop-during-traveling control is being executed by the idle stop device.

Consequently, it is possible to secure the assist amount in the electric power steering section at a necessary amount by setting the upper limit value to the first upper limit value when the traveling speed of the vehicle is higher than the predetermined speed and suppress power consumption in the electric power steering section by setting the upper limit value of the assist amount to the second upper limit value smaller than the first upper limit value when the engine is automatically stopped during the stoppage.

Furthermore, when the engine is automatically stopped while the vehicle is traveling at speed equal to or lower than the predetermined speed, the upper limit value of the assist amount is set to the third upper limit value smaller than the first upper limit value and larger than the second upper limit value. Therefore, it is possible to suppress power consumption while enabling securing of the assist amount in the electric power steering section.

Preferably, the upper limit value setting section sets the upper limit value to 0 when a predetermined time elapses after the idle-stop-during-stoppage control is executed by the idle stop device.

Consequently, in starting the vehicle while steering the vehicle immediately after shifting to the engine automatic stop during stoppage, it is possible to suppress a change in the upper limit value of the assist amount and smoothly start the vehicle without giving a sense of discomfort to a driver.

Preferably, the upper limit value setting section continuously changes the upper limit value when changing the upper limit value.

Consequently, it is possible to suppress a sudden change in the steering torque and improve steering feeling.

Preferably, the upper limit value setting section sets a rate of change of the upper limit value such that the rate of change is larger when the upper limit value is changed from the first upper limit value to the third upper limit value than when the upper limit value is changed from the third upper limit value to 0.

Consequently, it is possible to quickly suppress power consumption. Also, when the upper limit value of the assist amount is low and power consumption is small, by suppressing the change and changing the assist amount for the steering torque, it is possible to further improve the steering feeling.

Preferably, the idle stop device further restarts the engine when predetermined restart conditions including a condition that the steering torque is equal to or larger than a predetermined value hold after the automatic stop of the engine. The predetermined value is set smaller than the steering torque assisted by the third upper limit value.

Consequently, the restart of the engine is performed before the assist amount for the steering torque is limited during an increase in the steering torque. It is possible to avoid limitation of the assist amount to secure steering performance.

### BRIEF DESCRIPTION OF THE DRAWINGS

FIG. 1 is a block diagram showing the schematic configuration of an electric power steering device of a vehicle according to an embodiment of the present invention;
FIG. 2 is a flowchart for explaining the gist of an assist control in an electric power steering control unit in the embodiment;
FIG. 3 is a flowchart for explaining the gist of the assist control in the electric power steering control unit in the embodiment; and
FIG. 4 is a time chart showing transition of an assist current upper limit value during idle stop control during traveling.

### DETAILED DESCRIPTION OF THE PREFERRED EMBODIMENTS

An embodiment of the present invention is explained below with reference to the drawings.

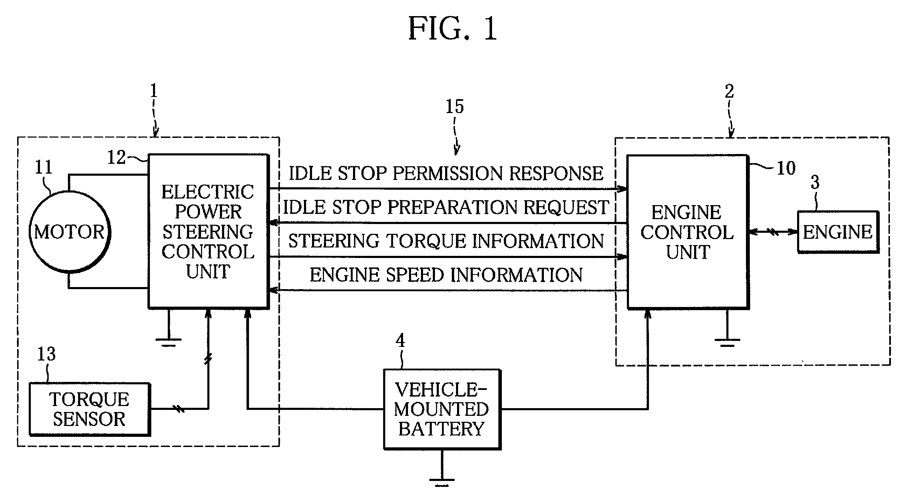

FIG. 1 is a block diagram showing the schematic configuration of an electric power steering device 1 of a vehicle according to the embodiment of the present invention.

The vehicle according to this embodiment includes an idle stop device 2 (an idle-stop-during-traveling control section and an idle-stop-during-stoppage control section).

Like the publicly-known idle stop device, the idle stop device 2 automatically stops the operation of an engine 3 when predetermined idle stop conditions (stop conditions during stoppage or stop conditions during traveling) hold, for example, when the vehicle stops at an intersection during vehicle traveling. Thereafter, the idle stop device 2 restarts the engine 3 when predetermined restart conditions hold and starts the vehicle.

As the idle stop conditions, vehicle speed V (traveling speed of the vehicle), brake (service brake of the vehicle) ON, a state of an operating hydraulic pressure of the brake, a temperature state of the engine 3, a state of a vehicle-mounted battery, an operation request for an air conditioner, an accelerator opening degree, and the like are set. As the restart conditions, a condition that at least one of the idle stop conditions does not hold or steering torque of the steering device of the vehicle is equal to or larger than a predetermined value Ts is set.

The idle stop device 2 in this embodiment is capable of performing idle stop control during stoppage and idle stop control during traveling.

The idle stop control during stoppage is control for performing an automatic stop of the engine 3 at least when the vehicle speed V is 0 among the idle stop conditions. The idle stop control during stoppage may set, as an idle stop condition (a stop condition during stoppage), a condition that, even if the vehicle speed V is not 0, the vehicle speed V is equal to or lower than very low vehicle speed (e.g., 3 km/h) that can be regarded as stoppage.

The idle stop control during traveling is a control for performing an automatic stop of the engine 3 at least when the vehicle V is traveling at speed equal to or lower than predetermined speed V1 among the idle stop conditions. The predetermined speed V1 is set to, for example, 15 km/h.

The idle stop device 2 is subjected to operation control by an engine control unit 10. The engine control unit 10 includes a storage device (a ROM, a RAM, a nonvolatile RAM, etc.) and a central processing unit (CPU). The idle stop device 2 is supplied with electric power from the vehicle-mounted battery 4 and driven. The idle stop device 2 subjects a motor for engine start, a fuel injection device, and the like, which are not shown in the figure, to operation control and performs control such as a stop and a restart of the engine 3.

The vehicle in this embodiment includes the electric power steering device 1 (an electric power steering section).

The electric power steering device 1 includes a motor 11 (an electric motor) configured to assist steering torque of the steering device of the vehicle, an electric power steering control unit 12 (an upper limit value setting section) configured to subject the motor 11 to operation control, and a torque sensor 13 configured to detect the steering torque of the steering device.

The electric power steering control unit 12 includes a storage device (a ROM, a RAM, a nonvolatile RAM, etc.) and a central processing unit (CPU). The electric power steering control unit 12 is supplied with electric power from the vehicle-mounted battery 4 and driven. The electric power steering control unit 12 can perform assist control for receiving steering torque detected by the torque sensor 13 and driving the motor 11 according to the steering torque to assist the steering torque. Note that an assist amount for the steering torque in the assist control is controlled by an electric current (an assist current) supplied to the motor 11 by the electric power steering control unit 12. An upper limit value Iah of the assist current is set. The upper limit value Iah is set to a first upper limit value Iah1 at normal traveling when the vehicle speed V is higher than the predetermined speed V1.

The engine control unit 10 and the electric power steering control unit 12 can transmit various kinds of information to each other via a CAN (Controller Area Network) 15. The various kinds of information are an idle stop preparation request and engine speed information transmitted from the engine control unit 10 to the electric power steering control unit 12 and an idle stop permission response and steering torque information transmitted from the electric power steering control unit 12 to the engine control unit 10.

The idle stop preparation request is a request for requesting the electric power steering control unit 12 to permit an idle stop (an automatic stop of the engine 3) when the idle stop conditions hold. When the electric power steering control unit 12 receives the idle stop preparation request from the engine control unit 10, the electric power steering control unit 12 determines necessity of permission of an idle stop and transmits the idle stop permission response to the engine control unit 10. The engine control unit 10 is set to not perform the idle stop when a permission response is not transmitted from the electric power steering control unit 12 even if the idle stop conditions hold.

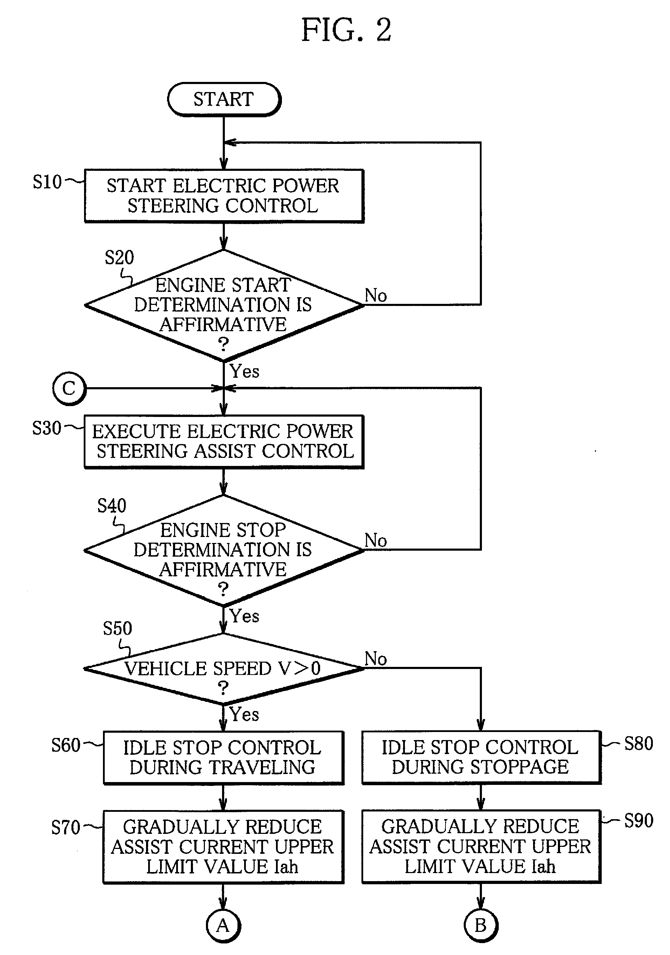

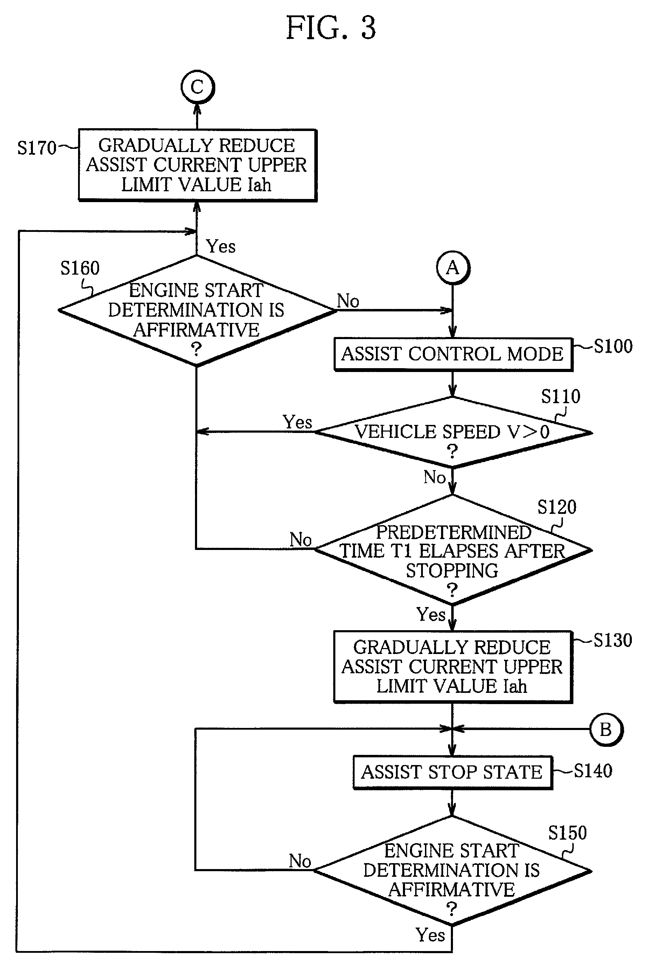

FIGS. 2 and 3 are flowcharts for explaining the gist of assist control in the electric power steering control unit 12.

This routine is started when a power supply for the vehicle is turned on.

First, in step S10 shown in FIG. 2, the electric power steering control unit 12 starts operation control for the electric power steering device 1. The routine proceeds to step S20.

In step S20, the electric power steering control unit 12 discriminates whether an engine start determination is affirmative, more specifically, discriminates from engine speed information input from the engine control unit 10 whether the engine 3 is started. When the engine start determination is affirmative and the engine 3 is started, the routine proceeds to step S30. When the engine start determination is negative, the routine returns to step S10.

In step S30, the electric power steering control unit 12 executes the assist control. That is, the electric power steering control unit 12 controls the operation of the motor 11 to assist steering torque on the basis of steering torque detected by the torque sensor 13. The routine proceeds to step S40.

In step S40, the electric power steering control unit 12 discriminates whether engine stop determination is affirmative, that is, whether an idle stop preparation request is input from the engine control unit 10. When the engine stop determination is affirmative (when the idle stop preparation request is input), the routine proceeds to step S50. When the engine stop determination is negative, the routine returns to step S30.

In step S50, the electric power steering control unit 12 receives the vehicle speed V and discriminates whether the vehicle speed V is larger than 0. When the vehicle speed V is larger than 0, the routine proceeds to step S60. When the vehicle speed V is equal to or smaller than 0, the routine proceeds to step S80.

In step S60, the electric power steering control unit 12 outputs an idle stop permission response for permitting the idle stop control during traveling to the engine control unit 10. The routine proceeds to step S70.

In step S70, the electric power steering control unit 12 gradually reduces the assist current upper limit value Iah equivalent to an upper limit value of an assist amount for the motor 11 of the electric power steering device 1 to a third upper limit value Iah2. The third upper limit value Iah2 is a value larger than 0 and smaller than the first upper limit value Iah1 set at normal time. The routine proceeds to step S100 in FIG. 3.

In step S80, the electric power steering control unit 12 outputs an idle stop permission response for permitting the idle stop control during stoppage to the engine control unit 10. The routine proceeds to step S90.

In step S90, the electric power steering control unit 12 gradually reduces the assist current upper limit value Iah to 0 (a second upper limit value). The routine proceeds to step S140 in FIG. 3. The second upper limit value only has to be a value smaller than the third upper limit value Iah2. However, if the second upper limit value is set to 0, it is possible to further suppress power consumption when the engine is automatically stopped during stoppage.

In step S100 shown in FIG. 3, the electric power steering control unit 12 sets an assist limitation mode for limiting the assist current upper limit value Iah to the third upper limit value Iah2. The routine proceeds to step S110.

In step S110, the electric power steering control unit 12 receives the vehicle speed V and discriminates whether the vehicle speed V is larger than 0. When the vehicle speed V is not larger than 0, that is, when the vehicle speed V is 0, the routine proceeds to step S120.

In step S120, the electric power steering control unit 12 discriminates whether the vehicle stops and a predetermined time T1 elapses after the stopping. When the predetermined time T1 elapses, the routine proceeds to step S130.

In step S130, the electric power steering control unit 12 gradually reduces the assist current upper limit value Iah to 0. The routine proceeds to step S140.

In step S140, the electric power steering control unit 12 sets an assist stop state in which an assist amount decreases to 0 by setting the assist current upper limit value Iah to 0. The routine proceeds to step S150.

In step S150, the electric power steering control unit 12 discriminates whether the engine start determination is affirmative as in step S20. When the engine start determination is affirmative, the routine proceeds to step S170. When the engine start determination is negative, the routine returns to step S140.

When it is determined in step S110 that the vehicle speed V is larger than 0 or it is determined in step S120 that the predetermined time T1 does not elapse after the vehicle stops or the vehicle does not stop, the routine proceeds to step S160.

In step S160, the electric power steering control unit 12 discriminates whether the engine start determination is affirmative as in step S20. When the engine start determination is affirmative, the routine proceeds to step S170. When the engine start determination is negative, the routine returns to step S100. When the vehicle does not stop, the routine also returns to step S100.

In step S170, the electric power steering control unit 12 gradually increases the assist current upper limit value Iah to the first upper limit value Iah1. The routine returns to step S30 shown in FIG. 2.

By performing the control as explained above, in this embodiment, when the stop determination for the engine 3 is affirmative, the idle stop control during stoppage is performed when the vehicle speed is equal to or smaller than 0 and the idle stop control during traveling is performed when the vehicle speed is larger than 0.

When the idle stop control during stoppage is performed, since the assist current upper limit value Iah is set to 0, it is possible to eliminate power consumption in the motor 11 of the electric power steering device 1.

When the idle stop control during traveling is started, the assist current upper limit value Iah decreases from the first upper limit value Iah1 to be the third upper limit value Iah2. By reducing the assist current upper limit value Iah in this way, it is possible to suppress an assist amount and suppress power consumption by the motor 11. During the idle stop control during traveling, since the vehicle speed V is low but is not 0, by setting the assist current upper limit value Iah to the third upper limit value Iah2 larger than 0, it is possible to secure an assist amount for steering torque by a necessary amount.

When the engine start determination is affirmative in the assist stop state in which the assist current upper limit value Iah is 0, that is, the assist amount is 0 or the assist limitation mode in which the assist current upper limit value Iah is limited to the third upper limit value Iah2, it is possible to sufficiently secure the assist amount by gradually increasing the assist current upper limit value Iah to be reset to the first upper limit value Iah1 in the normal state.

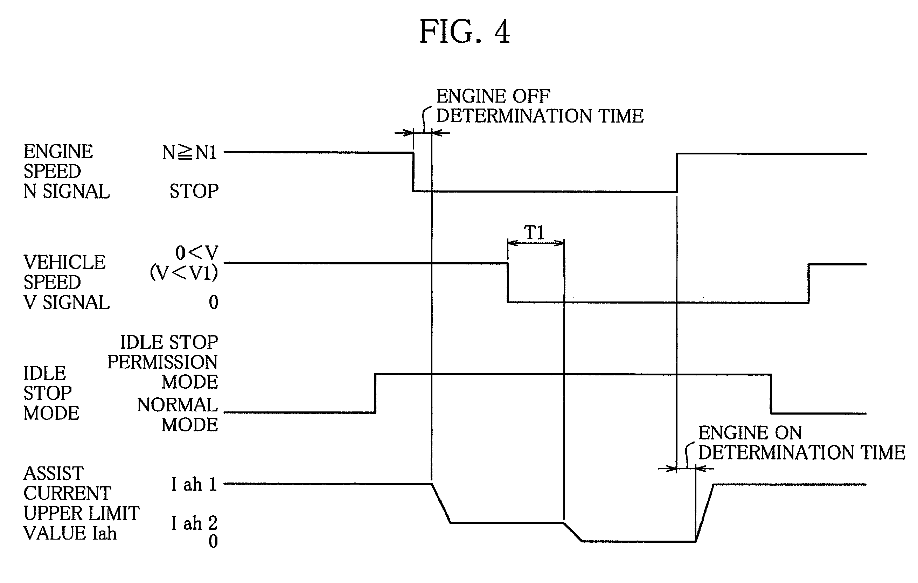

FIG. 4 is a time chart showing transition of the assist current upper limit value Iah during the idle stop control during traveling.

FIG. 4 shows transitions of engine speed N, the vehicle speed V, an idle stop mode, and the assist current upper limit value Iah in the case in which speed is reduced from low-speed traveling to perform the idle stop control during traveling and, after the speed is further reduced, the vehicle is started again.

In the idle stop mode, when the idle stop conditions hold and an idle stop preparation request signal is input from the engine control unit 10, a state in which the electric power steering control unit 12 determines that an idle stop is permitted is an idle stop permission mode and a state in which the idle stop is not permitted is a normal mode. The determination of the idle stop permission by the electric power steering control unit 12 only has to be performed, for example, when the electric power steering control unit 12 is in a controllable state and a power supply voltage of the electric power steering control unit 12 is equal to or larger than a necessary and sufficient value.

As shown in FIG. 4, in a state in which the vehicle speed V is larger than 0 and lower than the predetermined speed V1, when the other engine stop conditions hold and the idle stop mode changes to the idle stop permission mode, the engine 3 is automatically stopped by the engine control unit 10. The engine 3 changes to a stop state in which the speed N of the engine 3 is equal to or lower than predetermined speed N1. The predetermined speed N1 is a value smaller than idling speed and larger than cranking speed.

After the engine 3 is automatically stopped, the speed N decreases to be equal to or lower than the predetermined speed N1, and an engine off determination time (e.g., about several hundred milliseconds) elapses, the assist current upper limit value Iah continuously decreases to the third upper limit value Iah2.

The assist current upper limit value Iah is maintained at the third upper limit value Iah2 until the vehicle speed decreases to 0. When the vehicle speed V decreases to 0, after the predetermined time T1 (e.g., about several seconds) elapses, the assist current upper limit value Iah continuously decreases to 0.

Thereafter, the restart conditions hold, the engine 3 is restarted, the speed N of the engine 3 increases to be larger than the predetermined speed N1, and an engine on determination time (e.g., about several hundred milliseconds) elapses. Then, the assist current upper limit value Iah is continuously increases to be reset to the first upper limit value Iah1 at the normal time.

As explained above, in this embodiment, according to the idle stop control during traveling, when the engine is stopped, the assist current upper limit value Iah is set to the third upper limit value Iah2 between the first upper limit value Iah1, which is the normal value, and 0. Therefore, it is possible to obtain the assist amount for the steering torque up to a value equivalent to the third upper limit value Iah2 and secure the steering torque to secure steering performance. Furthermore, by limiting an upper limit value of the assist amount, it is possible to suppress power consumption.

When the assist current upper limit value Iah is changed, the assist current upper limit value Iah is gradually reduced or gradually increased to be continuously changed. Therefore, it is possible to suppress a sudden change in the assist amount for the steering torque. During the idle stop control during traveling, although speed is low, the vehicle is traveling. Therefore, by suppressing a sudden change in the assist amount for the steering torque, it is possible to realize improvement of steering feeling during the idle stop control during traveling.

When the assist current upper limit value Iah is changed from the first upper limit value Iah1 to the third upper limit value Iah2 and when the assist current upper limit value Iah is changed from the third upper limit value Iah2 to 0, rates of the change are set to be different. More specifically, the rate of change is set larger when the assist current upper limit value Iah is changed from the first upper limit value Iah1 to the third upper limit value Iah2 than when the assist current upper limit value Iah is changed from the third upper limit value Iah2 to 0. Consequently, it is possible to quickly suppress power consumption. When the assist current upper limit value Iah is low and power consumption is small, by suppressing the change and changing the assist amount for the steering torque, it is possible to further improve the steering feeling.

When the vehicle speed V decreases to 0, the assist current upper limit value Iah is not immediately reduced to 0. After the predetermined time T1 elapses, the assist current upper limit value Iah is reduced. Consequently, for example, in starting the vehicle while steering the vehicle immediately after stopping the vehicle, it is possible to suppress a change in the assist current upper limit value Iah and smoothly start the vehicle without giving a sense of discomfort to the driver concerning the steering.

As one of the restart conditions, a condition that the steering torque is equal to or larger than the predetermined value Ts is set. It is desirable to set the third upper limit value Iah2 to a value larger than a current upper limit value equivalent to the predetermined value Ts. Consequently, in a state in which the idle stop control during traveling is performed, for example, before steering is increased and limitation of the assist amount for the steering torque is performed, it is possible to restart the engine and avoid limitation of the assist amount to secure steering performance.

The present invention is not limited to the embodiment.

For example, in the embodiment, the third upper limit value Iah2 is set to a fixed value. However, the third upper limit value Iah2 may be changed on the basis of the vehicle speed V. The third upper limit value Iah2 only has to be set continuously or stepwise to decrease as the vehicle speed V falls. Consequently, it is possible to further suppress the assist amount for the steering torque and suppress power consumption while securing the assist amount for required steering torque corresponding to the vehicle speed V. In the embodiment, when the assist current upper limit value Iah is changed, the assist current upper limit value Iah may be changed stepwise rather than continuously or may be changed at a time.

The present invention can be widely applied to vehicles including an idle stop device capable of performing idle stop control during traveling and an electric power steering device.

## Claims

1. An electric power steering control device of a vehicle comprising:
an idle stop device (2) configured to execute idle-stop-during-stoppage control such that an engine (3) of the vehicle is automatically stopped when predetermined stop conditions during stoppage including a condition that the vehicle is stopped hold, and execute idle-stop-during-traveling control such that the engine (3) is automatically stopped when predetermined stop conditions during traveling including a condition that the vehicle is traveling at traveling speed equal to or lower than predetermined speed hold; and
an electric power steering section (1) configured to assist steering torque of the vehicle with an electric motor (11),
the electric power steering control device including an upper limit value setting section (12) configured to set an upper limit value of an assist amount for the steering torque in the electric power steering section (1), **characterised in that**
the upper limit value setting section (12) sets the upper limit value to a first upper limit value when the traveling speed of the vehicle is higher than the predetermined speed, sets the upper limit value to a second upper limit value smaller than the first upper limit value when the idle-stop-during-stoppage control is being executed by the idle stop device (2), and sets the upper limit value to a third upper limit value smaller than the first upper limit value and larger than the second upper limit value when the idle-stop-during-traveling control is being executed by the idle stop device (2).

2. The electric power steering control device of the vehicle according to claim 1, **characterized in that** the upper limit value setting section (12) sets the upper limit value to 0 when a predetermined time elapses after the idle-stop-during-stoppage control is executed by the idle stop device (2).

3. The electric power steering control device of the vehicle according to claim 1, **characterized in that** the upper limit value setting section (12) continuously changes the upper limit value when changing the upper limit value.

4. The electric power steering control device of the vehicle according to claim 2, **characterized in that** the upper limit value setting section (12) continuously changes the upper limit value when changing the upper limit value.

5. The electric power steering control device of the vehicle according to claim 4, **characterized in that** the upper limit value setting section (12) sets a rate of change of the upper limit value such that the rate of change is larger when the upper limit value is changed from the first upper limit value to the third upper limit value than when the upper limit value is changed from the third upper limit value to 0.

6. The electric power steering control device of the vehicle according to any one of claims 1 to 5, **characterized in that**
the idle stop device (2) further restarts the engine (3) when predetermined restart conditions including a condition that the steering torque is equal to or larger than a predetermined value hold after the automatic stop of the engine (3), and
the predetermined value is set smaller than the steering torque assisted by the third upper limit value.

## Patentansprüche

1. Steuervorrichtung für die elektrische Servolenkung eines Fahrzeugs, die aufweist:
eine Leerlaufabschaltvorrichtung (2), die so konfiguriert ist, dass sie eine Steuerung zur Leerlaufabschaltung im Stillstand so durchführt, dass ein Motor (3) des Fahrzeugs automatisch abgeschaltet wird, wenn vorbestimmte Abschaltbedingungen im Stillstand gelten, darunter eine Bedingung, dass das Fahrzeug gestoppt ist, und eine Steuerung zur Leerlaufabschaltung während der Fahrt so durchführt, dass der Motor (3) automatisch abgeschaltet wird, wenn vorbestimmte Abschaltbedingungen während der Fahrt gelten, darunter eine Bedingung, dass das Fahrzeug mit einer Fahrgeschwindigkeit fährt, die gleich oder niedriger als eine vorbestimmte Geschwindigkeit ist; und
ein elektrischer Servolenkungsabschnitt (1), der so konfiguriert ist, dass er das Lenkmoment des Fahrzeugs mit einem Elektromotor (11) unterstützt,
wobei die Steuervorrichtung für die elektrische Servolenkung über einen Einstellabschnitt (12) für obere Grenzwerte verfügt, der so konfiguriert ist, dass er einen oberen Grenzwert eines Unterstützungsbetrags für das Lenkmoment im elektrischen Servolenkungsabschnitt (1) einstellt, **dadurch gekennzeichnet, dass**
der Einstellabschnitt (12) für obere Grenzwerte den oberen Grenzwert auf einen ersten oberen Grenzwert einstellt, wenn die Fahrgeschwindigkeit des Fahrzeugs höher als die vorbestimmte Geschwindigkeit ist, den oberen Grenzwert auf einen zweiten oberen Grenzwert, der kleiner als der erste obere Grenzwert ist, einstellt, wenn die Steuerung zur Leerlaufabschaltung im Stillstand durch die Leerlaufabschaltvorrichtung (2) durchgeführt wird, und den oberen Grenzwert auf einen dritten oberen Grenzwert, der kleiner als der erste obere Grenzwert und größer als der zweite obere Grenzwert ist, einstellt, wenn die Steuerung zur Leerlaufabschaltung während der Fahrt durch die Leerlaufabschaltvorrichtung (2) durchgeführt wird.

2. Steuervorrichtung für die elektrische Servolenkung des Fahrzeugs nach Anspruch 1, **dadurch gekennzeichnet, dass** der Einstellabschnitt (12) für obere Grenzwerte den oberen Grenzwert auf 0 einstellt, wenn eine vorbestimmte Zeit vergangen ist, nachdem die Steuerung zur Leerlaufabschaltung im Stillstand durch die Leerlaufabschaltvorrichtung (2) durchgeführt wird.

3. Steuervorrichtung für die elektrische Servolenkung des Fahrzeugs nach Anspruch 1, **dadurch gekennzeichnet, dass** der Einstellabschnitt (12) für obere Grenzwerte den oberen Grenzwert beim Ändern des oberen Grenzwerts kontinuierlich ändert.

4. Steuervorrichtung für die elektrische Servolenkung des Fahrzeugs nach Anspruch 2, **dadurch gekennzeichnet, dass** der Einstellabschnitt (12) für obere Grenzwerte den oberen Grenzwert beim Ändern des oberen Grenzwerts kontinuierlich ändert.

5. Steuervorrichtung für die elektrische Servolenkung des Fahrzeugs nach Anspruch 4, **dadurch gekennzeichnet, dass** der Einstellabschnitt (12) für obere Grenzwerte eine Änderungsgeschwindigkeit des oberen Grenzwerts so einstellt, dass die Änderungsgeschwindigkeit dann größer ist, wenn der obere Grenzwert vom ersten oberen Grenzwert auf den dritten oberen Grenzwert geändert wird, als dann, wenn der obere Grenzwert vom dritten oberen Grenzwert auf 0 geändert wird.

6. Steuervorrichtung für die elektrische Servolenkung des Fahrzeugs nach einem der Ansprüche 1 bis 5, **dadurch gekennzeichnet, dass**
die Leerlaufabschaltvorrichtung (2) ferner den Motor (3) wieder startet, wenn vorbestimmte Wiederholstartbedingungen, darunter eine Bedingung, dass das Lenkmoment gleich oder größer als ein vorbestimmter Wert ist, nach der automatischen Abschaltung des Motors (3) gelten, und
der vorbestimmte Wert kleiner als das Lenkmoment eingestellt ist, das durch den dritten oberen Grenzwert unterstützt wird.

## Revendications

1. Dispositif de commande de direction assistée électrique d'un véhicule comprenant :
un dispositif d'arrêt au ralenti (2) configuré pour exécuter une commande arrêt-au-ralenti-pendant-l'arrêt de telle manière qu'un moteur (3) du véhicule est automatiquement stoppé pour des conditions d'arrêt prédéterminées pendant l'arrêt incluant une condition que le véhicule est maintenu arrêté, et exécuter une commande arrêt-au-ralenti-pendant-l'avance de telle manière que le moteur (3) est automatiquement stoppé pour des conditions d'arrêt prédéterminées pendant l'avance incluant une condition que le véhicule avance à une vitesse d'avance inférieure ou égale à une vitesse de maintien prédéterminée ; et
une section de direction assistée électrique (1) configurée pour assister un couple de direction du véhicule avec un moteur électrique (11),
le dispositif de commande de direction assistée électrique incluant une section de réglage de valeur limite supérieure (12) configurée pour régler une valeur limite supérieure d'une quantité d'assistance pour le couple de direction dans la section de direction assistée électrique (1), **caractérisé en ce que**
la section de réglage de valeur limite supérieure (12) règle la valeur limite supérieure à une première valeur limite supérieure quand la vitesse d'avance du véhicule est supérieure à la vitesse prédéterminée, règle la valeur limite supérieure à une seconde valeur limite supérieure plus petite que la première valeur limite supérieure quand la commande arrêt-au-ralenti-pendant-l'arrêt est exécutée par le dispositif d'arrêt au ralenti (2), et règle la valeur limite supérieure à une troisième valeur limite supérieure plus petite que la première valeur limite supérieure et plus grande que la seconde valeur limite supérieure quand la commande de arrêt-au-ralenti-pendant-l'avance est exécutée par le dispositif d'arrêt au ralenti (2).

2. Dispositif de commande de direction assistée électrique du véhicule selon la revendication 1, **caractérisé en ce que** la section de réglage de valeur limite supérieure (12) règle la valeur limite supérieure à 0 quand un temps prédéterminé s'est écoulé après que la commande arrêt-au-ralenti-pendant-l'arrêt a été exécutée par le dispositif d'arrêt au ralenti (2).

3. Dispositif de commande de direction assistée électrique du véhicule selon la revendication 1, **caractérisé en ce que** la section de réglage de valeur limite supérieure (12) change continument la valeur limite supérieure lors du changement de la valeur limite supérieure.

4. Dispositif de commande de direction assistée électrique du véhicule selon la revendication 2, **caractérisé en ce que** la section de réglage de valeur limite supérieure (12) change continument la valeur limite supérieure lors du changement de la valeur limite supérieure.

5. Dispositif de commande de direction assistée électrique du véhicule selon la revendication 4, **caractérisé en ce que** la section de réglage de valeur limite supérieure (12) règle un taux de changement de la valeur limite supérieure de telle manière que le taux de changement est plus grand quand la valeur limite supérieure est changée de la première valeur limite supérieure à la troisième valeur limite supérieure que quand la valeur limite supérieure est changée de la troisième valeur limite supérieure à 0.

6. Dispositif de commande de direction assistée électrique du véhicule selon l'une quelconque des revendications 1 à 5, **caractérisé en ce que**
le dispositif d'arrêt au ralenti (2) redémarre en outre le moteur (3) pour des conditions de redémarrage prédéterminées incluant une condition que le couple de direction est supérieur ou égal à une valeur prédéterminé maintenue après l'arrêt automatique du moteur (3), et
la valeur prédéterminée est réglée plus petite que le couple de direction assisté par la troisième valeur limite supérieure.
